Europäisches Patentamt

European Patent Office

Office européen des brevets

(19)

(11) Numéro de publication : **0 074 139**
**B1**

(12) **FASCICULE DE BREVET EUROPÉEN**

(45) Date de publication du fascicule du brevet :
23.12.87

(21) Numéro de dépôt : 82201052.6

(22) Date de dépôt : 23.08.82

(51) Int. Cl.⁴ : **C 08 L 51/06**

(54) Polymère du chlorure de vinyle greffé sur un copolymère d'éthylène et d'acétate de vinyle.

(30) Priorité : 02.09.81 FR 8116797

(43) Date de publication de la demande :
16.03.83 Bulletin 83/11

(45) Mention de la délivrance du brevet :
23.12.87 Bulletin 87/52

(84) Etats contractants désignés :
AT BE CH DE FR GB IT LI LU NL SE

(56) Documents cités :
BE-A- 636 977
DE-B- 1 794 348
FR-A- 1 443 135
FR-A- 2 037 674
Le dossier contient des informations techniques
présentées postérieurement au dépôt de la demande
et ne figurant pas dans le présent fascicule.

(73) Titulaire : SOLVAY & Cie (Société Anonyme)
Rue du Prince Albert, 33
B-1050 Bruxelles (BE)

(72) Inventeur : Lamberty, Philippe
Rue Léon XIII, 74
B-1120 Bruxelles (BE)

Jouve, 18. rue St-Denis, 75001 Paris. France

**0 074 139**

## Description

La présente invention concerne un polymère du chlorure de vinyle greffé sur un copolymère d'éthylène et d'acétate de vinyle, des compositions rigides à base d'un tel polymère du chlorure de vinyle et d'un copolymère acrylique renforçant et l'utilisation d'un tel polymère comprenant facultativement un copolymère acrylique renforçant pour l'extrusion de profilés.

Pour la fabrication d'objets façonnés rigides résistant au choc, on a déjà proposé d'utiliser des polymères du chlorure de vinyle constitués de polymères du chlorure de vinyle greffés sur un copolymère d'éthylène et d'acétate de vinyle. Dans le brevet belge BE-A-636 977 (Farbenfabriken Bayer Aktiengesellschaft), on recommande d'utiliser pour la fabrication de tels polymères greffés des copolymères d'éthylène et d'acétate de vinyle contenant de 30 à 70 % d'acétate de vinyle dont la viscosité intrinsèque est comprise entre 0,2 et 1,5. Ces polymères greffés du chlorure de vinyle présentent une résistance au choc sur entaille (résilience Charpy) nettement plus élevée que le polychlorure de vinyle homopolymère. Ils sont utilisables directement pour le façonnage d'objets rigides résistant au choc, tels que des profilés pour châssis de fenêtres.

Alternativement, on a déjà proposé d'améliorer la résistance au choc des objets rigides façonnés à partir de compositions à base de polychlorure de vinyle en ajoutant à ces compositions un agent renforçant polymérique. Pour la fabrication de profilés résistant au choc et aux intempéries, on recommande généralement l'utilisation d'agents renforçants du type des copolymères acryliques renforçants (Plastics Engineering, avril 1977, L.W. Peacock et J.T. Lutz Jr., Additives for Plastics — Impact modifiers for PVC, pages 36 à 39). Dans les brevets FR-A-1 283 498 et GB-A-1 305 499 (Röhm & Haas Company), on décrit des compositions à base de polychlorure de vinyle de ce type qui sont utilisables effectivement pour le façonnage d'objets rigides résistant au choc et aux intempéries, tels que des profilés pour châssis de fenêtres.

Néanmoins, les polymères du chlorure de vinyle greffés sur un copolymère d'éthylène et d'acétate de vinyle de l'art antérieur ainsi que les compositions à base de polychlorure de vinyle contenant des copolymères acryliques renforçants présentent un défaut grave pour leur utilisation pour la fabrication de profilés pour châssis. En effet, les châssis sont fabriqués habituellement par soudure, par exemple par soudure au miroir, de segments de profilés. Or, on a observé que les soudures des châssis fabriqués au moyen de profilés façonnés à partir de ces polymères ou compositions présentent souvent une résistance au choc insuffisante et sont, tantôt fragiles, tantôt ductiles, selon les conditions de mise en œuvre.

La présente invention a pour but de procurer des polymères du chlorure de vinyle greffés sur un copolymère d'éthylène et d'acétate de vinyle qui ne présentent plus ce défaut.

La présente invention concerne un polymère du chlorure de vinyle greffé sur un copolymère d'éthylène et d'acétate de vinyle qui contient de 0,5 à 7 % en poids d'un copolymère d'éthylène et d'acétate de vinyle comprenant de 20 à 50 % en poids d'acétate de vinyle dont la viscosité intrinsèque, mesurée à 20 °C dans le m-xylène, est comprise entre 0,05 et 0,10 l/g.

Les polymères du chlorure de vinyle greffés sur un copolymère d'éthylène et d'acétate de vinyle selon l'invention contiennent de 0,5 à 7 % en poids de copolymère d'éthylène et d'acétate de vinyle. L'utilisation de polymères greffés contenant moins de 0,5 % en poids de copolymère d'éthylène et d'acétate de vinyle n'apporte pas une amélioration significative de la soudabilité. Celle-ci augmente avec la teneur en copolymère d'éthylène et d'acétate de vinyle. Cependant, lorsque la teneur en copolymère d'éthylène et d'acétate de vinyle dépasse 7 % en poids, un retrait inacceptable peut apparaître lors de la mise en œuvre, de sorte qu'il n'est pas indiqué de dépasser cette teneur. Les polymères greffés qui ont la préférence contiennent de 2 à 5 % en poids de copolymère d'éthylène et d'acétate de vinyle.

Les copolymères d'éthylène et d'acétate de vinyle utilisables pour la fabrication des polymères du chlorure de vinyle greffés selon l'invention contiennent de 20 à 50 % en poids d'acétate de vinyle, et de préférence, de 35 à 45 % en poids d'acétate de vinyle. Ils présentent une viscosité intrinsèque mesurée à 20 °C dans le m-xylène comprise entre 0,05 et 0,10 l/g et, de préférence, entre 0,07 et 0,09 l/g. Les meilleurs résultats ont été obtenus avec des copolymères d'éthylène et d'acétate de vinyle tels que définis ci-avant présentant une viscosité intrinsèque, mesurée à 20 °C dans le m-xylène, de 0,08 g/l.

Des polymères greffés tout particulièrement préférés contiennent donc de 2 à 5 % en poids de copolymère d'éthylène et d'acétate de vinyle comprenant 35 à 45 % en poids d'acétate de vinyle dont la viscosité intrinsèque, mesurée à 20 °C dans le m-xylène, est comprise entre 0,07 et 0,09 l/g.

En général, le taux de greffage des polymères greffés selon l'invention est supérieur à 50 %. Avantageusement, le taux de greffage est égal à 70 % au moins et, de préférence, à 80 % au moins.

Le mode de fabrication des polymères greffés selon l'invention n'est pas critique. On peut donc mettre en œuvre n'importe quelle technique usuelle de greffage. Avantageusement, on fabrique les polymères greffés par prédispersion, à température ambiante, du copolymère d'éthylène et d'acétate de vinyle dans le chlorure de vinyle en présence d'eau, suivie de la polymérisation du chlorure de vinyle en suspension aqueuse suivant la technique divulguée dans le brevet belge BE-A-636 977 (Farbenfabriken Bayer Aktiengesellschaft). La polymérisation est alors effectuée sous pression autogène, a une température comprise entre 20 et 80 °C, en présence des initiateurs et des agents dispersants usuels de la polymérisation en suspension aqueuse du chlorure de vinyle.

2

Les polymères greffés selon l'invention peuvent être mis en œuvre par tous les procédés classiques de transformation des matières plastiques. Pour ce faire, on leur incorpore préalablement les ingrédients usuels utilisés à la mise en œuvre des polymères du chlorure de vinyle, tels que des stabilisants thermiques, des lubrifiants, des pigments, des charges, etc.

La présente invention concerne également des compositions rigides à base d'un polymère du chlorure de vinyle greffé sur un copolymère d'éthylène et d'acétate de vinyle tel que défini ci-avant et un copolymère acrylique renforçant constitué d'un polymère de méthacrylate de méthyle greffé sur un élastomère d'acrylate d'alkyle dont les groupements alkyles contiennent de 2 à 10 atomes de carbone. Les compositions selon l'invention présentent à la fois une excellente soudabilité et une résistance au choc sur entaille (résilience Charpy) élevée dans une large gamme de températures de mise en œuvre, ce qui se traduit par une très grande souplesse.

Les quantités respectives de polymère du chlorure de vinyle greffé et de copolymère acrylique renforçant peuvent varier dans une certaine mesure. Généralement, les compositions selon l'invention comprennent de 98 à 85 % en poids de polymère du chlorure de vinyle greffé et de 2 à 15 % en poids de copolymère acrylique renforçant. Lorsque la teneur en copolymère d'éthylène et d'acétate de vinyle du polymère du chlorure de vinyle greffé est élevée, on peut généralement se contenter d'une quantité faible de copolymère acrylique renforçant et vice versa.

Des compositions selon l'invention qui sont tout particulièrement préférées contiennent de 95 à 90 % en poids de polymère du chlorure de vinyle greffé contenant de 2 à 5 % en poids de copolymère d'éthylène et d'acétate de vinyle et de 5 à 10 % en poids de copolymère acrylique renforçant.

Les copolymères acryliques renforçants utilisables dans les compositions selon l'invention sont bien connus en eux-mêmes. Ce sont des polymères greffés, obtenus par polymérisation en plusieurs étapes, de méthacrylate de méthyle ou de mélanges de comonomères acryliques à teneur prépondérante en méthacrylate de méthyle, sur des élastomères (homo- et copolymères) d'acrylates d'alkyles, éventuellement réticulés, dont les groupements alkyles contiennent de préférence de 4 à 8 atomes de carbone. On donne la préférence aux polymères de méthacrylate de méthyle greffés sur un élastomère acrylique réticulé tel qu'un élastomère réticulé d'acrylate de butyle. Des copolymères acryliques renforçants utilisables dans les compositions selon l'invention qui sont du type des polymères greffés de méthacrylate de méthyle sur un élastomère non réticulé d'acrylate d'alkyle sont décrits dans le brevet FR-A-1 283 498 (Rohm & Haas Company).

Des copolymères acryliques renforçants utilisables de préférence dans les compositions selon l'invention sont des polymères de méthacrylate de méthyle greffés sur un élastomère acrylique réticulé. De tels copolymères sont décrits dans le brevet GB-A-1 305 499 (Rohm & Haas Company).

Les compositions selon l'invention peuvent contenir, en outre, les ingrédients usuels utilisés dans les compositions des polymères du chlorure de vinyle, tels que des stabilisants thermiques, des agents facilitant la mise en œuvre (agents « processing aid »), des lubrifiants, des pigments, des charges, etc.

La fabrication des compositions selon l'invention ne pose aucun problème particulier. Ainsi, on peut fabriquer ces compositions par mélange physique du polymère du chlorure de vinyle greffé et du copolymère acrylique renforçant. Par exemple, on peut incorporer en premier lieu au polymère du chlorure de vinyle greffé les stabilisants thermiques et les agents lubrifiants et ensuite le copolymère acrylique renforçant.

La présente invention concerne aussi l'utilisation des polymères du chlorure de vinyle selon l'invention comprenant facultativement un copolymère acrylique renforçant pour l'extrusion de profilés.

Les exemples qui suivent illustrent l'invention.

Polymère

Les exemples 1 et 2, selon l'invention, illustrent des polymères du chlorure de vinyle greffés sur un copolymère d'éthylène et d'acétate de vinyle (EVA) comprenant environ 40,5 % en poids d'acétate de vinyle et dont la viscosité intrinsèque, mesurée à 20 °C dans le m-xylène, est égale à 0,08 l/g.

Exemple 1

Dans un autoclave de 4,6 litres équipé d'un agitateur et plongé dans un bain thermostatique, on introduit successivement à 25 °C et sous une agitation de 200 tours/minute 2 040 g d'eau déminéralisée, 1,7 g de méthylhydroxypropylcellulose, 34 g de copolymère EVA, 0,85 g de peroxyde de lauroyle et 0,50 g de peroxydicarbonate de diéthyle. Ensuite, on agite ce mélange pendant 5 minutes à 500 tours/minute avant d'arrêter l'agitation. On fait le vide (pression résiduelle absolue : 8 kPa). On remet l'agitation en marche à 500 tours/minute et on introduit 1 700 g de chlorure de vinyle, puis, toujours à 25 °C, on continue à agiter la charge pendant 30 minutes. On chauffe le contenu de l'autoclave à 59 °C, température que l'on maintient constante pendant toute la durée de la polymérisation. Lorsque la pression dans l'autoclave tombe à une valeur égale à la moitié de la pression initiale atteinte à 59 °C, on réduit l'agitation, on dégaze la suspension et on isole le polymère par essorage et séchage dans les conditions usuelles. Le taux de conversion du chlorure de vinyle s'élève à 92 %.

Le polymère greffé ainsi produit contient environ 2,1 % en poids de copolymère EVA avec un taux de greffage supérieur à 80 %. Son nombre K, mesuré à 25 °C dans la cyclohexanone, s'élève à 66.

Exemple 2

L'exemple 2 est conforme en tous points à l'exemple 1, si ce n'est qu'on met en œuvre 0,68 g de copolymère EVA.

Le polymère greffé ainsi produit contient environ 4,2 % en poids de copolymère EVA avec un taux de greffage supérieur à 80 %. Son nombre K, mesuré dans les mêmes conditions, s'élève à 66.

Compositions

Les exemples 3, 5 et 6 illustrent des compositions selon l'invention. Dans les exemples 3 et 5, on a utilisé comme polymère du chlorure de vinyle le polymère du chlorure de vinyle greffé obtenu à l'exemple 1. Dans l'exemple 6, on a utilisé comme polymère du chlorure de vinyle le polymère du chlorure de vinyle greffé obtenu à l'exemple 2.

Dans les exemples 4 et 7, donnés à titre de comparaison, le polymère du chlorure de vinyle est un polychlorure de vinyle de nombre K (mesuré à 25 °C dans la cyclohexanone) de 66 obtenu par polymérisation en suspension aqueuse.

Dans les exemples 3 à 7, le copolymère acrylique renforçant est le produit Paraloid KM 323 B vendu par la firme Rohm & Haas co.

Dans les exemples 3 et 4, on évalue la résistance au choc sur entaille (résilience Charpy) de plaques pressées suivant la norme ISO R 179 en fonction de la température de malaxage.

On a pressé à 190 °C des plaques de 4 mm d'épaisseur après malaxage des compositions détaillées ci-dessous pendant 4 minutes à différentes températures.

| | |
|---|---|
| Polymère du chlorure de vinyle | 92 parties en poids |
| Copolymère acrylique renforçant | 8 parties en poids |
| Phosphite dibasique de plomb | 4 parties en poids |
| Stéarate de plomb (à 51 %) | 1,5 partie en poids |
| Stéarate de calcium | 0,5 partie en poids |

Les températures de malaxage et la résilience Charpy des plaques pressées figurent au Tableau I.

La comparaison des résultats de l'exemple 3, selon l'invention, et de l'exemple 4, donné à titre de comparaison met en évidence l'amélioration appréciable de la résilience Charpy dans une large gamme de températures de mise en œuvre que procurent les compositions selon l'invention.

Châssis

Dans les exemples 5, 6 et 7, on évalue la soudabilité de profilés soudés par la technique du miroir chauffant.

Les compositions mises en œuvre à l'extrusion sont les suivantes, les teneurs étant exprimées en poids :

| | Ex. 5 | Ex. 6 | Ex. 7 |
|---|---|---|---|
| Polymère du chlorure de vinyle | 92 | 95 | 90 |
| Copolymère acrylique renforçant | 8 | 5 | 10 |

| | Exemples 5, 6 et 7 |
|---|---|
| Phosphite dibasique de plomb | 4 |
| Stéarate de plomb (à 51 %) | 1,5 |
| Stéarate de calcium | 0,5 |
| Acide gras lubrifiant | 0,2 |
| Polymère acrylique facilitant la mise en œuvre | 1 |
| Carbonate de calcium (diamètre moyen 0,7 micron) | 2 |
| Oxyde de titane | 4 |
| Mélange maître azurant | 0,3 |

L'extrusion des profilés a été effectuée avec une machine à double vis-à-vis coniques, au départ d'un mélange fabriqué dans un mélangeur rapide.

L'assemblage des coins par soudure des profilés au miroir chauffant à été fait dans les conditions ci-après :

| | |
|---|---|
| température du miroir chauffant | 250 °C |

pression de soudage    3,5 kg/cm$^2$
durée de préchauffage des profilés sur le miroir    20 sec
temps d'application des profilés l'un contre l'autre lors de l'assemblage    40 sec
dimension des coins soudés    35 × 35 cm

les bourrelets qui se sont formés à l'angle extérieur du coin soudé ont été fraisés.

La qualité des soudures a été évaluée par mesure de la résistance au choc, par chute de poids, des coins soudés après un conditionnement thermique des profilés pendant 5 heures à 23 °C dans la salle isotherme où s'est effectuée l'évaluation dont les conditions sont détaillées ci-après :

fixer une des branches du coin soudé verticalement contre un support rigide de manière à lui interdire tout mouvement lors de l'essai, la branche horizontale étant dirigée vers le bas,

laisser reposer le coin soudé sur une plaquette de butée en PVC rigide de 9 mm d'épaisseur fixée sur le support,

placer la branche horizontale à la base d'une colonne de guidage permettant d'y laisser tomber un poids,

garnir la rainure supérieure de la branche horizontale d'une pièce en PVC rigide d'environ 50 g de forme adaptée au profilé,

poids : 500 g, 1 kg et 2 kg se terminant par une tête hémisphérique en acide de diamètre égal à 50 mm,

les impacts successifs sont donnés sur la branche horizontale à 8 cm de la face interne de la branche verticale en partant avec un poids de 500 g à une hauteur initiale de 30 cm augmentée ensuite par pas de 10 cm jusqu'à obtention de dégâts ; s'il n'y a pas de dégâts à 200 cm, on poursuit l'essai sur le même coin avec un poids de 1 kg à l'énergie directement supérieure, c'est-à-dire tombant d'une hauteur de 110 cm.

La résistance au choc des coins soudés (valeur moyenne pour éprouvettes) est la suivante :

Exemple 5    35 J (m. N)
Exemple 6    37 J (m. N)
Exemple 7    23 J (m. N)

La comparaison des résultats des exemples 5 et 6, selon l'invention, avec ceux de l'exemple 7, donné à titre de comparaison, montre la supériorité des compositions selon l'invention sur le plan de la résistance mécanique des assemblages soudés (soudabilité).

Tableau I

| Température de malaxage, °C | Résilience Charpy sur plaque pressée, kJ/m$^2$ | |
| --- | --- | --- |
| | Exemple 3 | Exemple 4 |
| 140 | 19,8 | 11,1 |
| 145 | 24,8 | 11,6 |
| 150 | 28,4 | 11,9 |
| 155 | 30,7 | 12,0 |
| 160 | 31,7 | 12,0 |
| 165 | 31,2 | 11,8 |
| 170 | 29,5 | 11,4 |
| 175 | 26,3 | 10,9 |
| 180 | 21,8 | 10,2 |

**Revendications** (pour les états contractants : BE, CH, DE, FR, GB, IT, LI, LU, NL, SE)

1. Polymère du chlorure de vinyle greffé sur un copolymère d'éthylène et d'acétate de vinyle contenant de 0,5 à 7 % en poids d'un copolymère d'éthylène et d'acétate de vinyle comprenant de 20 à 50 % en poids d'acétate de vinyle, caractérisé en ce que la viscosité intrinsèque du copolymère d'éthylène et d'acétate de vinyle, mesurée à 20 °C dans le m-xylène, est comprise entre 0,05 et 0,10 l/g.

2. Polymère du chlorure de vinyle selon la revendication 1, caractérisé en ce qu'il contient de 2 à 5 % en poids d'un copolymère d'éthylène et d'acétate de vinyle comprenant de 35 à 45 % en poids d'acétate de vinyle dont la viscosité intrinsèque, mesurée à 20 °C dans le m-xylène, est comprise entre 0,07 et 0,09 l/g.

3. Polymère selon la revendication 1 ou 2, caractérisé en ce que le taux de greffage est égal à 80 % au moins.

4. Compositions rigides à base d'un polymère du chlorure de vinyle selon l'une quelconque des revendications 1 à 3, caractérisées en ce qu'elle comprennent un copolymère acrylique renforçant constitué d'un polymère de méthacrylate de méthyle greffé sur un élastomère d'acrylate d'alkyle dont les groupements alkyles contiennent de 2 à 10 atomes de carbone.

5. Compositions rigides selon la revendication 4, caractérisées en ce qu'elles contiennent de 95 à 90 % en poids de polymère du chlorure de vinyle et de 5 à 10 % en poids de copolymère acrylique renforçant.

6. Compositions rigides selon la revendication 4 ou 5 caractérisées en ce que le copolymère acrylique renforçant est un polymère de méthacrylate de méthyle greffé sur un élastomère réticulé d'acrylate d'alkyle dont les groupements alkyles contiennent de 4 à 8 atomes de carbone.

7. Utilisation d'un polymère du chlorure de vinyle selon l'une quelconque des revendications 1 à 3 comprenant facultativement un copolymère acrylique renforçant selon l'une quelconque des revendications 4 à 6 pour l'extrusion de profilés.


**Revendications** (pour l'Etat contractant AT)

1. Compositions rigides à base d'un polymère du chlorure de vinyle greffé sur un copolymère d'éthylène et d'acétate de vinyle contenant de 0,5 à 7 % en poids d'un copolymère d'éthylène et d'acétate de vinyle comprenant de 20 à 50 % en poids d'acétate de vinyle, caractérisées en ce que la viscosité intrinsèque du copolymère d'éthylène et d'acétate de vinyle, mesurée à 20 °C dans le m-xylène, est comprise entre 0,05 et 0,10 l/g et en ce qu'elles comprennent un copolymère acrylique renforçant constitué d'un polymère de méthacrylate de méthyle greffé sur un élastomère d'acrylate d'alkyle dont les groupements alkyles contiennent de 2 à 10 atomes de carbone.

2. Compositions rigides selon la revendication 1, caractérisées en ce que le polymère du chlorure de vinyle contient de 2 à 5 % en poids d'un copolymère d'éthylène et d'acétate de vinyle comprenant de 35 à 45 % en poids d'acétate de vinyle dont la viscosité intrinsèque, mesurée à 20 °C dans le m-xylène, est comprise entre 0,07 et 0,09 l/g.

3. Compositions rigides selon la revendication 1 ou 2, caractérisées en ce que le taux de greffage du polymère du chlorure de vinyle est égal à 80 % au moins.

4. Compositions rigides selon l'une quelconque des revendications 1 à 3, caractérisées en ce qu'elles contiennent de 95 à 90 % en poids de polymère du chlorure de vinyle et de 5 à 10 % en poids de copolymère acrylique renforçant.

5. Compositions rigides selon l'une quelconque des revendications 1 à 4, caractérisées en ce que le copolymère acrylique renforçant est un polymère de méthacrylate de méthyle greffé sur un élastomère réticulé d'acrylate d'alkyle dont les groupements alkyles contiennent de 4 à 8 atomes de carbone.

6. Utilisation des compositions selon l'une quelconque des revendications 1 à 5 pour l'extrusion de profilés.


**Claims** (for the Contracting States : BE, CH, DE, FR, GB, IT, LI, LU, NL, SE)

1. Polymer of vinyl chloride grafted onto a copolymer of ethylene and vinyl acetate containing from 0.5 to 7 % by weight of a copolymer of ethylene and vinyl acetate comprising from 20 to 50 % by weight of vinyl acetate, characterized in that the intrinsic viscosity of the copolymer of ethylene and vinyl acetate, measured at 20 °C in m-xylene is between 0.05 and 0.10 l/g.

2. Vinyl chloride polymer according to Claim 1, characterized in that it contains from 2 to 5 % by weight of a copolymer of ethylene and vinyl acetate comprising from 35 to 45 % by weight of vinyl acetate whose intrinsic viscosity, measured at 20 °C in m-xylene, is between 0.07 and 0.09 l/g.

3. Polymer according to Claim 1 or 2, characterized in that the degree of grafting is equal to at least 80 %.

4. Rigid compositions based on a vinyl chloride polymer according to any one of Claims 1 to 3, characterized in that they comprise a reinforcing acrylic copolymer consisting of a polymer of methyl methacrylate grafted onto an elastomer of alkyl acrylate in which the alkyl groups contain from 2 to 10 carbon atoms.

5. Rigid compositions according to Claim 4, characterized in that they contain from 95 to 90 % by weight of vinyl chloride polymer and from 5 to 10 % by weight of reinforcing acrylic copolymer.

6. Rigid compositions according to Claim 4 or 5, characterized in that the reinforcing acrylic copolymer is a polymer of methyl methacrylate grafted onto a cross-linked elastomer of alkyl acrylate in which the alkyl groups contain from 4 to 8 carbon atoms.

7. Use of a vinyl chloride polymer according to any one of Claims 1 to 3 optionally comprising a reinforcing acrylic copolymer according to any one of Claims 4 to 6 for the extrusion of profiles.


**Claims** (for the Contracting State AT)

1. Rigid compositions based on a polymer of vinyl chloride grafted onto a copolymer of ethylene and vinyl acetate containing from 0.5 to 7 % by weight of a copolymer of ethylene and vinyl acetate comprising from 20 to 50 % by weight of vinyl acetate, characterized in that the intrinsic viscosity of the copolymer of ethylene and vinyl acetate, measured at 20 °C in m-xylene, is between 0.05 and 0.10 l/g and in that they comprise a reinforcing acrylic copolymer consisting of a polymer of methyl methacrylate grafted onto an elastomer of alkyl acrylate in which the alkyl groups contain from 2 to 10 carbon atoms.

2. Rigid compositions according to Claim 1, characterized in that the vinyl chloride polymer contains from 2 to 5 % by weight of a copolymer of ethylene and vinyl acetate comprising from 35 to 45 % by weight of vinyl acetate whose intrinsic viscosity, measured at 20 °C in m-xylene, is between 0.07 and 0.09 l/g.

3. Rigid compositions according to Claim 1 or 2, characterized in that the degree of grafting of the vinyl chloride polymer is equal to at least 80 %.

4. Rigid compositions according to any one of Claims 1 to 3, characterized in that they contain from 95 to 90 % by weight of vinyl chloride polymer and 5 to 10 % by weight of reinforcing acrylic copolymer.

5. Rigid compositions according to any one of Claims 1 to 4, characterized in that the reinforcing acrylic copolymer is a polymer of methyl methacrylate grafted onto a crosslinked elastomer of alkyl acrylate in which the alkyl groups contain from 4 to 8 carbon atoms.

6. Use of the compositions according to any one of Claims 1 to 5 for the extrusion of profiles.


**Patentansprüche** (für die Vertragsstaaten : BE, CH, DE, FR, GB, IT, LI, LU, NL, SE)

1. Vinylchloridpolymer aufgepfropft auf ein Ethylen-Vinylacetat-Copolymer enthaltend 0,5 bis 7 Gew.-% eines Ethylen-Vinylacetat-Copolymers mit 20 bis 50 Gew.-% Vinylacetat, dadurch gekennzeichnet, daß die « Viscosité intrinsèque » (Viskositätszahl Z nach Staudinger) des Ethylen-Vinylacetat-Copolymers, gemessen bei 20 °C in m-Xylol zwischen 0,05 und 0,10 l/g beträgt.

2. Vinylchloridpolymer nach Anspruch 1, dadurch gekennzeichnet, daß es 2 bis 5 Gew.-% eines Ethylen-Vinylacetat-Copolymers enthält mit 35 bis 45 Gew.-% Vinylacetat, dessen Viskosität, gemessen bei 20 °C in m-Xylol zwischen 0,07 und 0,09 l/g beträgt.

3. Polymer nach Anspruch 1 oder 2, dadurch gekennzeichnet, daß der Pfropfgrad mindestens 80 % beträgt.

4. Harte Zusammensetzungen auf der Grundlage eines Vinylchloridpolymers nach einem der Ansprüche 1 bis 3, dadurch gekennzeichnet, daß sie ein verstärkendes Acrylcopolymer enthalten, bestehend auf einem Methylmethacrylatpolymer aufgepfropft auf einem Alkylacrylatelastomer, dessen Alkylgruppen 2 bis 10 Kohlenstoffatome enthalten.

5. Harte Zusammensetzungen nach Anspruch 4, dadurch gekennzeichnet, daß sie 95 bis 90 Gew.-% Vinylchloridpolymer und 5 bis 10 Gew.-% verstärkendes Acrylcopolymer enthalten.

6. Harte Zusammensetzungen nach Anspruch 4 oder 5, dadurch gekennzeichnet, daß das verstärkende Acrylcopolymer ein Methylmethacrylatpolymer, aufgepfropft auf einem vernetzten Alkylacrylatelastomer, dessen Alkylgruppen 4 bis 8 Kohlenstoffatome enthalten, ist.

7. Verwendung eines Vinylchloridpolymers nach einem der Ansprüche 1 bis 3, gegebenenfalls enthaltend ein verstärkendes Acrylcopolymer nach einem der Ansprüche 4 bis 6 zur Extrusion von Profilen.


**Patentansprüche** (für den Vertragsstaat AT)

1. Harte Zusammensetzungen auf der Grundlage eines Vinylchloridpolymers aufgepfropft auf einem Ethylen-Vinylacetat-Copolymer enthaltend 0,5 bis 7 Gew.-% eines Ethylen-Vinylacetat-Copolymers mit 20 bis 50 Gew.-% Vinylacetat, dadurch gekennzeichnet, daß die « Viscosité intrinsèque » (Viskositätszahl Z nach Staudinger) des Ethylen-Vinylacetat-Copolymers, gemessen bei 20 °C in m-Xylol zwischen 0,05 und 0,10 l/g ist, und daß sie ein verstärkendes Acrylcopolymer enthalten, bestehend aus einem Methylmethacrylatpolymer aufgepfropft auf einem Alkylacrylat-Elastomer, dessen Alkylgruppen 2 bis 10 Kohlenstoffatome enthalten.

2. Harte Zusammensetzungen nach Anspruch 1, dadurch gekennzeichnet, daß das Vinylchloridpolymer 2 bis 5 Gew.-% eines Ethylen-Vinylacetat-Copolymers mit 35 bis 45 Gew.-% Vinylacetat enthalten,

**0 074 139**

dessen Viskosität, gemessen bei 20 °C in m-Xylol, zwischen 0,07 und 0,09 l/g liegt.

3. Harte Zusammensetzungen nach Anspruch 1 oder 2, dadurch gekennzeichnet, daß der Pfropfgrad des Vinylchlorids mindestens 80 % beträgt.

4. Harte Zusammensetzungen nach einem der Ansprüche 1 bis 3, dadurch gekennzeichnet, daß sie 95 bis 90 Gew.-% Vinylchloridpolymer und 5 bis 10 Gew.-% verstärkendes Acrylcopolymer enthalten.

5. Harte Zusammensetzungen nach einem der Ansprüche 1 bis 4, dadurch gekennzeichnet, daß das verstärkende Acrylcopolymer ein Methylmethacrylatpolymer, aufgepfropft auf einem vernetzten Alkylacrylat-Elastomer, dessen Alkylgruppen 4 bis 8 Kohlenstoffatome enthalten, ist.

6. Verwendung der Zusammensetzungen nach einem der Ansprüche 1 bis 5 für die Extrusion von Profilen.